# EUROPEAN PATENT APPLICATION

(11) **EP 4 277 435 A1**
(43) Date of publication of application: **15.11.2023**
(21) Application number: 21916749.1
(22) Date of filing: 06.01.2021
(51) Int. Cl.: H04W 84/12

(54) **COMMUNICATION METHOD AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/070515
(87) International publication number: WO 2022/147691

(57) **Abstract**

Provided are a communication method and a communication device. The communication method may comprise: determining a first message frame, wherein the first message frame comprises physical layer capability information, the physical layer capability information at least indicates the capability of a device, which operates at a second bandwidth, receiving or sending a PPDU of a first bandwidth, and the first bandwidth is greater than or equal to 160 MHz; and executing a communication operation on the basis of the first message frame. By means of the technical solution provided in the example embodiments of the present disclosure, a spectrum utilization rate can be improved.

## Description

### TECHNICAL FIELD

The present disclosure relates to the communication field, and more particularly, to a communication method and a communication device in wireless communication.

### BACKGROUND

Recent developments in Wi-Fi technology have focused on 320 MHz bandwidth transmission, aggregation and coordination of multiple frequency bands, etc. This technology is expected to increase the rate and throughput by at least four times compared with the existing standard. Some of the main application scenarios are: video transmission, AR (Augmented Reality), and VR (Virtual Reality).

The aggregation and coordination of multiple frequency bands refer to a simultaneous communication between devices in frequency bands of 2.4 GHz, 5.8 GHz and 6-7 GHz. For the simultaneous communication between devices in multiple frequency bands, a new MAC (Media Access Control) mechanism to perform management is being defined. In addition, it is also expected that the aggregation and coordination of multiple frequency bands can support a low-latency transmission.

A current multi-band aggregation and system technology supports a maximum bandwidth of 320 MHz (160 MHz+160 MHz), and may also support 240 MHz (160 MHz+80 MHz) and other bandwidths.

In the current art, it is required that a station operating at a small bandwidth (e.g. 20 MHz, 80 MHz, or 160 MHz) should support uplink and downlink transmissions of a larger bandwidth. However, in existing standards, there is no specific signaling to identify the situation where a station operating at a small bandwidth supports an orthogonal frequency-division multiple access (OFDMA) transmission at a large bandwidth.

### SUMMARY

Aspects of the present disclosure aim to address at least the above-mentioned problems and/or defects. The following technical solutions are provided by embodiments of the present disclosure.

According to illustrative embodiments of the present disclosure, a communication method is provided. The communication method includes: determining a first message frame; and performing a communication operation based on the first message frame. The first message frame includes physical layer capability information, the physical layer capability information at least indicates a capability of a device operating at a second bandwidth for receiving or sending a physical layer protocol data unit (PPDU) of a first bandwidth, and the first bandwidth is greater than or equal to 160 MHz.

According to illustrative embodiments of the present disclosure, a communication device is provided. The communication device may include: a processing module, configured to: determine a first message frame; and a communicating module, configured to: perform a communication operation based on the first message frame. The first message frame includes physical layer capability information, the physical layer capability information indicates a capability of the communication device operating at a second bandwidth for receiving or sending a PPDU of a first bandwidth, and the first bandwidth is greater than or equal to 160 MHz.

According to illustrative embodiments of the present disclosure, an electronic device is provided. The electronic device includes a memory, a processor, and a computer program stored on the memory and executable on the processor. The processor implements the above method when executing the computer program.

According to illustrative embodiments of the present disclosure, a computer readable storage medium is provided. The computer readable storage medium has stored thereon computer programs that, when executed by a processor, cause the above method to be implemented.

The technical solutions provided by illustrative embodiments of the present disclosure may improve spectrum utilization efficiency.

### BRIEF DESCRIPTION OF THE DRAWINGS

The above and other features of embodiments of the present disclosure will become more apparent by describing illustrative embodiments of the present disclosure in detail with reference to the accompanying drawings, in which:
FIG. 1 is a flowchart illustrating a communication method according to illustrative embodiments of the present disclosure.
FIG. 2 is a block diagram illustrating a communication device according to illustrative embodiments of the present disclosure.

### DETAILED DESCRIPTION

The following description with reference to the accompanying drawings is provided to assist in a comprehensive understanding of embodiments of the present disclosure as defined by the appended claims and their equivalents. The embodiments of the present disclosure include various specific details, which are to be regarded as examples merely. Also, the descriptions of well-known techniques, functions, and constructions may be omitted for clarity and conciseness.

The terms and words used in the present disclosure are not limited to the bibliographical meanings, but are merely used by the inventor to enable a clear and consistent understanding of the present disclosure. Accordingly, it will be appreciated by those skilled in the art that the descriptions of embodiments of the present disclosure are provided for purposes of illustration and not for purpose of limitation.

It should be understood by those skilled in the art that, unless clearly indicated in the context otherwise, the singular forms "a", "an" "one", "said" and "the" used herein may also include plural forms. It should be further understood that the terms "include", "comprise" and the variants thereof as used in the present disclosure refer to the presence of the described features, integers, steps, operations, components and/or assemblies, but do not exclude the presence or addition of one or more other features, integers, steps, operations, components, assemblies and/or groups thereof.

It should be further understood that, although the terms "first", "second", etc. may be used to describe various elements, these elements shall not be limited by these terms. These terms are only used to distinguish one element from another. Thus, a first element discussed below may also be referred to as a second element without departing from the teachings of illustrative embodiments.

It should be understood that when a component is "connected" or "coupled" to another component, it may be directly connected or coupled to another component, or there may be an intermediate component. In addition, the terms "connected" or "coupled" as used herein may include wirelessly connected or wirelessly coupled. The term "and/or" or the expression "at least one of ..." includes any and all combinations of one or more of the associated listed items.

Unless otherwise defined, all terms (including technical and scientific terms) used herein have the same meaning as commonly understood by those skilled in the art to which the present disclosure belongs.

In a wireless communication system, a basic service set (BSS) may include an access point (AP) device and one or more non-AP devices that communicate with the AP device. A basic service set may be connected to a distribution system (DS) through the AP device of the basic service set, and then access to another basic service set to form an extended service set (ESS).

The AP device is a wireless switch for a wireless network, and also the core of the wireless network. The AP device may be configured as a wireless base station, mainly configured as a bridge for connecting a wireless network and a wired network. With the AP device, the wired network and the wireless network may be integrated.

As an example, the AP device may include a software application and/or a circuitry, to enable other types of nodes in the wireless network to communicate with the outside and inside of the wireless network via the AP device. For example, the AP device may be a terminal device or a network device equipped with a Wi-Fi (Wireless Fidelity) chip.

As an example, the non-AP device may include, but is not limited to: a cellular phone, a smart phone, a wearable device, a computer, a personal digital assistants (PDA), a personal communication system (PCS) device, a personal information manager (PIM), a personal navigation device (PND), a global positioning system, a multimedia device, an Internet of Things (IoT) device, etc. Hereinafter, for convenience of description, the term "non-AP device" may be used interchangeably with a station (STA) or a non-AP STA device.

Hereinafter, a communication method and a communication device provided according to various embodiments of the present disclosure may define a capability information value for a station of 20 MHz/80 MHz/160 MHz (40 MHz) to support an orthogonal frequency-division multiple access (OFDMA) transmission at a large bandwidth, thereby satisfying communication requirements of the current technology.

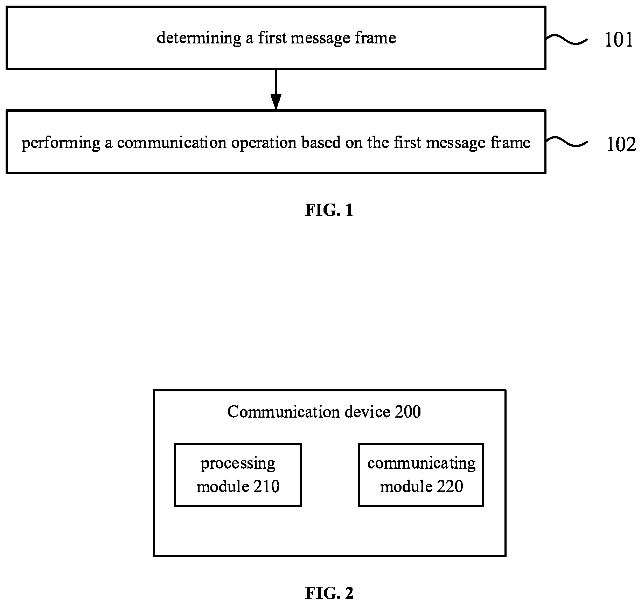

FIG. 1 is a flowchart illustrating a communication method according to illustrative embodiments of the present disclosure. The communication method shown in FIG. 1 may be applied to a non-AP STA device.

Referring to FIG. 1, in step 110, a first message frame may be determined. The first message frame includes physical layer capability information. The physical layer capability information may include information identifying the capability of a device operating at a small bandwidth (for example, a non-AP STA device) to support an OFDMA transmission at a large bandwidth. For example, the physical layer (PHY) capability information may at least indicate the capability of a device operating at a second bandwidth for receiving or sending a PPDU (physical layer (PHY) protocol data unit) of a first bandwidth. According to embodiments, the first bandwidth may be a larger bandwidth, for example, greater than or equal to 160 MHz; and the second bandwidth may be a smaller bandwidth, for example, 20 MHz, 40 MHz, 80 MHz or 160 MHz. That is, the physical layer capability information may at least indicate the capability of a device operating at 20 MHz, 40 MHz, 80 MHz or 160 MHz for receiving or sending the PPDU greater than or equal to 160 MHz (for example, 160 MHz+160 MHz, 320 MHz or 240 MHz). Specifically, for example, when a station operates at a working bandwidth of 20 MHz, in a 5 GHz spectrum or 6 GHz spectrum, a larger bandwidth of communication it supports may be 320 MHz/160+160 MHz or 160 MHz/80+80 MHz. However, it will be understood that the values of the above-mentioned bandwidths are only examples, and embodiments of the present disclosure are not limited thereto, and other bandwidth sizes that may be used for wireless communication are included within the scope of the present disclosure. In addition, the physical layer capability information may also identify the capability of a device operating at other bandwidths for receiving or sending the PPDU of other bandwidths, for example, a support capability of a device operating at a 20 MHz bandwidth for sending or receiving the PPDU of 320 MHz/160+160 MHz, a support capability of a device operating at a 20 MHz bandwidth for sending or receiving the PPDU of 160 MHz/80+80 MHz, a support capability of a device operating at a 40 MHz bandwidth for sending or receiving the PPDU of 320 MHz/160+160 MHz, a support capability of a device operating at a 40 MHz bandwidth for sending or receiving the PPDU of 160 MHz/80+80 MHz, a support capability of a device operating at a 80 MHz bandwidth for sending or receiving the PPDU of 320 MHz/160+160 MHz, a support capability of a device operating at a 80 MHz bandwidth for sending or receiving the PPDU of 160 MHz/80+80 MHz, a support capability of a device operating at a 160 MHz bandwidth for sending or receiving the PPDU of 320 MHz/160+160 MHz, and a support capability of a device operating at a 160+160 MHz or 320 MHz bandwidth for sending or receiving the PPDU of 40 MHz, 80 MHz, 160 MHz, 80+80 MHz, 320 MHz and/or 160+160 MHz. In addition, the term "physical layer (PHY) capability information" is only used as an example, and embodiments of the present disclosure are not limited to the physical layer, and other capability information may also be used to indicate the capability of a device operating at the second bandwidth for receiving or sending the PPDU of the first bandwidth, as described above.

According to embodiments, the first message frame may be a probe request frame, a multi-link (ML) probe request frame or an association request frame. The above physical layer capability information may be encapsulated in the first message frame. In an embodiment, the first message frame may include an extreme high throughput physical layer (EHT PHY) capability information element or a multi-link (ML) information element. The physical layer capability information may be encapsulated in the EHT PHY capability information element or the ML information element.

In embodiments of the present disclosure, there may be many ways to determine the first message frame. For example, the non-AP STA device may generate the first message frame according to at least one of the following conditions: a network condition, a load condition, a hardware capability of a sending/receiving device, a service type, and a related protocol provision; which is not specifically limited in embodiments of the present disclosure. In embodiments of the present disclosure, the non-AP STA device may also obtain the first message frame from an external device, which is not specifically limited in embodiments of the present disclosure.

In embodiments of the present disclosure, the physical layer capability information includes a first identifier, and the first identifier may indicate a support capability of the device operating at the second bandwidth for receiving or sending the PPDU of the first bandwidth.

According to embodiments of the present disclosure, in case that the first identifier is set to a first value (for example, "1"), the first identifier may indicate that the device operating at the second bandwidth supports receiving or sending the PPDU of the first bandwidth; and in case that the first identifier is set to a second value (for example, "0"), the first identifier may indicate that the device operating at the second bandwidth does not support receiving or sending the PPDU of the first bandwidth.

When the second bandwidth is 20 MHz and the first bandwidth is 160+160 MHz or 320 MHz, the first identifier may be represented as "20 MHz in 320/160+160 MHz EHT PPDU", for indicating whether a device (e.g. a non-AP STA device) operating at a 20 MHz bandwidth supports receiving or sending a 320/160+160 MHz EHT PPDU. The station may also support multi-link operations, such as operating at a working bandwidth of 20 MHz in the 2.4 GHz spectrum, and also operating at the working bandwidth of 20 MHz in the 5 GHz spectrum and 6 GHz spectrum, while an AP multi-link device (MLD) that establishes an association with the station supports a bandwidth greater than 20 MHz in each spectrum, such as supporting a working bandwidth of 40 MHz in the 2.4 GHz spectrum, and supporting a working bandwidth of 320 MHz/160+160 MHz in the 5 GHz or 6 GHz spectrum.

When the second bandwidth is 40 MHz and the first bandwidth is 160+160 MHz or 320 MHz, the first identifier may be represented as "40 MHz in 320/160+160 MHz EHT PPDU", for indicating whether a device (e.g. a non-AP STA device) operating at a 40 MHz bandwidth supports receiving or sending a 320/160+160 MHz EHT PPDU.

When the second bandwidth is 80 MHz and the first bandwidth is 160+160 MHz or 320 MHz, the first identifier may be represented as "80 MHz in 320/160+160 MHz EHT PPDU", for indicating whether a device (e.g. a non-AP STA device) operating at a 80 MHz bandwidth supports receiving or sending 320/160+160 MHz EHT PPDU.

When the second bandwidth is 160 MHz and the first bandwidth is 160+160 MHz or 320 MHz, the first identifier may be represented as "160 MHz in 320/160+160 MHz EHT PPDU", for indicating whether a device (e.g. a non-AP STA device) operating at a 160 MHz bandwidth supports receiving or sending 320/160+160 MHz EHT PPDU.

The first identifier may include at least one of "20 MHz in 320/160+160 MHz EHT PPDU", "40 MHz in 320/160+160 MHz EHT PPDU", "80 MHz in 320/160+160 MHz EHT PPDU" and "160 MHz in 320/160+160 MHz EHT PPDU".

In addition, it will be understood that the above-mentioned second bandwidth and first bandwidth are only illustrative, and the first identifier may also indicate the capability of the device operating at other bandwidths for receiving or sending the PPDU of other bandwidths (for example, 240 MHz/160+80 MHz).

For ease of description, in the following, illustrations are made with reference to an example where the first identifier includes "20 MHz in 320/160+160 MHz EHT PPDU" (that is, the second bandwidth is 20 MHz and the first bandwidth is 160+160 MHz or 320 MHz). In this case, the PPDU of the first bandwidth received may be an extreme high throughput (EHT) multi-user (MU) PPDU of 160+160 MHz or 320 MHz, that is, in case that the first identifier is set to the first value (for example, "1") and a device operating at the second bandwidth (20 MHz) serves as a receiver, receiving an EHT MU PPDU of 160+160 MHz or 320 MHz may be supported. In addition, in this case, the PPDU of the first bandwidth sent may be an EHT TB (trigger-based) PPDU of 160+160 MHz or 320 MHz, that is, in case that the first identifier is set to the first value (for example, "1") and a device operating at the second bandwidth (20 MHz) serves as a sender, sending an EHT TB PPDU of 160+160 MHz or 320 MHz may be supported.

In embodiments of the present disclosure, the physical layer capability information includes a second identifier, and the second identifier may include a plurality of bits configured to indicate information of a channel bandwidth and/or a resource unit (RU) supported of the device (e.g. a non-AP STA device).

For example, the plurality of bits may include at least one of the following::
a first bit, configured to identify the support capability of the device for the channel bandwidths of 40 MHz and 80 MHz;
a second bit, configured to identify the support capability of the device for the channel bandwidth of 160 MHz;
a third bit, configured to identify the support capability of the device for the channel bandwidth of 160 MHz or 80+80 MHz;
a fourth bit, configured to identify the support capability of the device for the channel bandwidth of 320 MHz;
a fifth bit, configured to identify the support capability of the device for the channel bandwidth of 320 MHz or 160+160 MHz;
a sixth bit, configured to identify the support capability of the device for transmitting the PPDU of the first bandwidth by using the resource unit with a size smaller than a first size; and
a seventh bit, configured to identify the support capability of the device for transmitting the PPDU of the first bandwidth by using the resource unit with a size equal to the first size.

The support capability for OFDMA transmissions of various bandwidths may be identified by setting values of the plurality of bits of the second identifier. In an embodiment, in case that the first bit is set to a third value (such as but not limited to "1") and the sixth bit is set to a fourth value (such as but not limited to "1"), it is indicated that the device (e.g. a non-AP STA device) supports an OFDMA transmission of 160 MHz, 160 MHz+160 MHz, 320 MHz, or 240 MHz. In another embodiment, in case that the second bit is set to a fifth value (such as but not limited to "1") and the sixth bit is set to a sixth value (such as but not limited to "1"), it is indicated that the device (e.g. a non-AP STA device) supports an OFDMA transmission of 160 MHz+160 MHz, 320 MHz, or 240 MHz. According to embodiments, the OFDMA transmission may support a multiple resource unit (MRU). According to embodiments, the OFDMA transmission may support a single type resource unit (SRU). The SRU may indicate that an allocated resource unit includes only a certain number of tones. The MRU may be composed of SRUs, for example, the MRU may be composed of at least two specific SRUs and is related to the bandwidth. In embodiments of the present disclosure, resource allocation for the MRU or SRU may be implemented through signaling interaction.

Further, the support capability for PPDU transmissions of various bandwidths may be identified by setting values of the plurality of bits of the second identifier and a value of the first identifier in combination. For example, in case that the seventh bit of the second identifier is set to a seventh value (such as but not limited to "1") and the first identifier (e.g. 20 MHz in 320/160+160 MHz EHT PPDU) is set to the second value (such as but not limited to "0"), it may be identified that receiving or sending a PPDU of 40 MHz and/or 80 MHz is supported; in case that the seventh bit of the second identifier is set to an eighth value (such as but not limited to "1") and the first identifier (e.g. 20 MHz in 320/160+160 MHz EHT PPDU) is set to the first value (such as but not limited to "1"), it is indicated that receiving or sending a PPDU of 40 MHz, 80 MHz, 160 MHz, 80+80 MHz, 320 MHz and/or 160+160 MHz is supported. The setting manner for the cases where the first identifier includes 40 MHz in 320/160+160 MHz EHT PPDU and/or 80 MHz in 320/160+160 MHz EHT PPDU is similar to the embodiments described here, and repeated descriptions are omitted for the sake of brevity.

In an embodiment, in case that the first identifier includes 160 MHz in 320/160+160 MHz EHT PPDU, when the first bit of the second identifier is set to, for example but not limited to, "1", the second bit and the third bit of the second identifier each are set to, for example but not limited to, "0", and for example, 160 MHz in 320/160+160 MHz EHT PPDU is set to, for example but not limited to, "1", it is indicated that the OFDMA transmission of 160/80+80 MHz or 320/160+160 MHz is supported, for example, sending or receiving the PPDU of 160/80+80 MHz or 320/160+160 MHz is supported. Further, when the second bit of the second identifier is set to, for example but not limited to, "1", and 160 MHz in 320/160+160 MHz EHT PPDU is also set to, for example but not limited to, "1", it is indicated that the OFDMA transmission of 160/80+80 MHz or 320/160+160 MHz is supported. It will be understood that the bit value of the first identifier and the bit values of the second bit and the third bit of the second identifier here are only illustrative, and other bit values capable of identifying the capability information are also feasible.

In an embodiment, when any bit of the first bit to the third bit is set to a value indicating that a corresponding channel bandwidth is supported (such as but not limited to "1"), the device (e.g. a non-AP STA device) needs to receive or send the PPDU of a large bandwidth at a small bandwidth, so the value of the second identifier may be set to the first value (such as but not limited to "1"). In an embodiment, when the fourth and fifth bits are set to an eighth value (such as but not limited to "1") to identify that the device supports 320 MHz and/or 160+160 MHz channel bandwidths, the device (e.g. a non-AP STA device) may receive or send the PPDU of a large bandwidth directly at a large bandwidth, so the value of the second identification may be set to the second value (such as but not limited to "0").

Regarding the above-mentioned sixth bit and seventh bit, the resource unit with the first size may take different values according to the size of the second bandwidth, that is, take different values according to the device (e.g. a non-AP STA device) operating under different bandwidths.

In case that the second bandwidth is 20 MHz, the resource unit with the first size may be 242-tone; and the resource unit with the size smaller than the first size may be: 26-tone, 52-tone, 106-tone, 52+26-tone, or 106+26-tone. "The resource unit with the first size being 242-tone" may mean that all the resource in 20 MHz is used to receive or send the PPDU (e.g. the PPDU of 320 MHz and/or 160+160 MHz), and "the resource unit with the size smaller than the first size" may mean that a part of the resource in 20 MHz is used to receive or send the PPDU (e.g. the PPDU of 320 MHz and/or 160+160 MHz).

In case that the second bandwidth is 40 MHz, the resource unit with the first size may be 484-tone; and the resource unit with the size smaller than the first size may be: 26-tone, 52-tone, 106-tone, 52+26-tone, or 106+26-tone. "The resource unit with the first size being 484-tone" may mean that all the resource in 40 MHz is used to receive or send the PPDU (e.g. the PPDU of 320 MHz and/or 160+160 MHz), and "the resource unit with the size smaller than the first size" may mean that a part of the resource in 40 MHz is used to receive or send the PPDU (e.g. the PPDU of 320 MHz and/or 160+160 MHz).

In case that the second bandwidth is 80 MHz, the resource unit with the first size may be 996-tone; and the resource unit with the size smaller than the first size may be: 26-tone, 52-tone, 106-tone, 52+26-tone, 106+26-tone or 484+242 tone. "The resource unit with the first size being 996-tone" may mean that all the resource in 80 MHz is used to receive or send the PPDU (e.g. the PPDU of 320 MHz and/or 160+160 MHz), and "the resource unit with the size smaller than the first size" may mean that a part of the resource in 80 MHz is used to receive or send the PPDU (e.g. the PPDU of 320 MHz and/or 160+160 MHz).

In case that the second bandwidth is 160 MHz, the resource unit with the first size may be 996×2-tone; and the resource unit with the size smaller than the first size may be: 26-tone, 52-tone, 106-tone, 52+26-tone, 106+26-tone, 484+996 tone or 996+484+242-tone. "The resource unit with the first size being 996×2-tone" may mean that all the resource in 160 MHz is used to receive or send the PPDU (e.g. the PPDU of 320 MHz and/or 160+160 MHz), and "the resource unit with the size smaller than the first size" may mean that a part of the resource in 160 MHz is used to receive or send the PPDU (e.g. the PPDU of 320 MHz and/or 160+160 MHz).

It will be understood that the above descriptions on the number of tones of the resource unit with the first size and that of the resource unit with the size smaller than the first size are merely illustrative, and other number of tones that may be used to receive or send the PPDU is also included within the scope of the present disclosure.

It may be understood that, in the present disclosure, each element in the first identifier and the second identifier exists independently, and these elements are shown as examples, but all elements must exist at the same time. Those skilled in the art may understand that the value of each element may be an independent embodiment.

According to embodiments, multiple bits may be used to identify the supported bandwidth, e.g. B0B1B2B3B4B5B6B7, where B0 (for example, corresponding to the first bit described above) identifies the support on 40 MHz and 80 MHz, B1 (for example, corresponding to the second bit described above) identifies the support on 160 MHz, B2 (for example, corresponding to the third bit described above) identifies the support on 160 MHz/80+80 MHz, B3 (for example, corresponding to the fourth bit described above) identifies the support on 320 MHz, and B4 (for example, corresponding to the fifth bit described above) identifies the support on 160 MHz+160 MHz.

According to an embodiment, when B0 is set to 1, then B6 (for example, corresponding to the sixth bit described above) is set to "1", it is indicated that the OFDMA transmission of a large bandwidth of 160 MHz, 320 MHz, or 240 MHz is supported.

According to an embodiment, when B1 is set to "1", then B6 is set to "1", it is indicated that the OFDMA transmission of 320 MHz or 240 MHz is supported.

The above-mentioned two embodiments where the MRU or the SRU is supported may be realized by a signaling interaction manner.

According to embodiments, when B7 (for example, corresponding to the seventh bit described above) is set to "1", it is indicated that a 242-tone RU is supported.

According to embodiments, when the bit of "20 MHz in 320/160+160 MHz EHT PPDU" is set to "1", it is indicated that a station operating at 20 MHz may support receiving an EHT MU PPDU of 160+160 MHz/320 MHz or support sending an EHT TB (trigger-based) PPDU of 160+160 MHz/320 MHz, where the RU has a size of 26-tone, 52-tone, 106-tone, 52+26-tone, 106+26-tone.

According to embodiments, the above-mentioned "B0B1B2B3B4B5B6B7" and "20 MHz in 320/160+160 MHz EHT PPDU" are encapsulated in the EHT PHY capability information element or the ML (multi-link) information element.

As an example, B0B1B2B3B4B5B6B7 may be set as shown in the following table.

| Bit | Bandwidth/Resource unit | Settings |
|---|---|---|
| B0 | channel bandwidth of 40 MHz and 80 MHz | 1. when at least one of B0 to B 1 is set to 1, the first identifier (e.g. 20 MHz in 320/160+160 MHz EHT PPDU) is set to 1, for identifying that the device supports receiving or sending the PPDU of 160+160 MHz or 320 MHz; |
| B1 | channel bandwidth of 160 MHz | |
| B2 | channel bandwidth of 160 MHz or 80+80 MHz | |
| | | 2. when B0 to B1 each are set to 0, the first identifier (e.g. 20 MHz in 320/160+160 MHz EHT PPDU) is set to 0, for identifying that the device does not support receiving or sending the PPDU of 160+160 MHz or 320 MHz. |
| B3 | channel bandwidth of 320 MHz | 1. when at least one of B3 and B4 is set to 1, the first identifier (e.g. 20 MHz in 320/160+160 MHz EHT PPDU) is set to 0, and there is no need to receive or send the PPDU of a large bandwidth at a small bandwidth; |
| B4 | channel bandwidth of 320 MHz or 160+160 MHz | |
| | | 2. when B3 and B4 are both set to 0, the first identifier (e.g. 20 MHz in 320/160+160 MHz EHT PPDU) is set to 1, and it is needed to receive or send the PPDU of a large bandwidth at a small bandwidth. |
| B5 | reserved | |
| B6 | 26-tone, 52-tone, 106-tone, | 1. when B0 = 1 and B6 = 1, receiving or sending the OFDMA |
| | 52+26-tone, or 106+26-tone | transmission of 160 MHz, 320 MHz or 240 MHz at a small bandwidth is supported; |
| | | 2. when B1 = 1 and B6 = 1, receiving or sending the OFDMA transmission of 320 MHz or 240 MHz at a small bandwidth is supported. |
| B7 | 242-tone | 1. when B7 = 1 and the first identifier (e.g. 20 MHz in 320/160+160 MHz EHT PPDU) = 0, receiving or sending the PPDU of 40 MHz and/or 80 MHz at a small bandwidth is supported; |
| | | 2. when B7 = 1 and the first identifier (e.g. 20 MHz in 320/160+160 MHz EHT PPDU) = 1, receiving or sending the PPDU of 40 MHz, 80 MHz, 160 MHz, 80+80 MHz, 320 MHz and/or 160+160 MHz at a small bandwidth is supported. |

The setting modes shown in the above table are merely illustrative, and the present disclosure is not limited thereto. Other modes for identifying the PPDU transmission capability of various bandwidths by setting the values of the first identifier and/or the second identifier are also included in the scope of the present disclosure. In addition, the description of the above embodiments and table mainly focuses on the case of "20 MHz in 320/160+160 MHz EHT PPDU", and it will be understood that the cases of "40 MHz in 320/160+160 MHz EHT PPDU", "80 MHz in 320/160+160 MHz EHT PPDU", and "160 MHz in 320/160+160 MHz EHT PPDU" may be similarly set accordingly, and repeated description is omitted herein for the sake of brevity.

Continuing to refer to FIG. 1, in step 120, a communication operation may be performed based on the first message frame. For example, a station (non-AP STA device) may send the PPDU of a large bandwidth to an AP. As another example, the AP supporting 320 MHz may receive the first message frame, and determine according to the first identifier and/or the second identifier in the physical capability information that the station, although it operates at 20 MHz, may parse the EHT PPDU of 320 MHz, so the AP may transmit the PPDU of a large bandwidth to the station.

In the above, the communication method in which the station (non-AP STA device) operating at a small bandwidth receives or sends the PPDU of a large bandwidth is described with reference to FIG. 1, and correspondingly, although not described, embodiments according to the present disclosure may include a communication method in which an access point device (AP) receives the first message frame and performs the communication operation based on the first message frame. The first message frame may include physical layer capability information, and the physical layer capability information may include the first identifier and/or the second identifier. The first message frame, the physical capability information, the first identifier, and the second identifier may be similar to those described with reference to FIG. 1, and repeated descriptions are omitted herein for the sake of brevity.

FIG. 2 is a block diagram illustrating a communication device according to illustrative embodiments of the present disclosure.

In an embodiment, the communication device 200 described in FIG. 2 may be applied to a station (a non-AP STA device).

Referring to FIG. 2, the communication device 200 may include a processing module 210 and a communicating module 220.

The processing module 210 may be configured to: determine a first message frame. The first message frame includes physical layer capability information, and the physical layer capability information indicates a capability of the communication device operating at a second bandwidth for receiving or sending a PPDU of a first bandwidth, and the first bandwidth is greater than or equal to 160 MHz. The second communicating module 220 may be configured to: perform a communication operation based on the first message frame.

According to some embodiments, the physical layer capability information includes a first identifier, and the first identifier indicates a support capability of the communication device operating at the second bandwidth for receiving or sending the PPDU of the first bandwidth.

According to some embodiments, in case that the first identifier is set to a first value, the first identifier indicates that the communication device operating at the second bandwidth supports receiving or sending the PPDU of the first bandwidth; and in case that the first identifier is set to a second value, the first identifier indicates that the communication device operating at the second bandwidth does not support receiving or sending the PPDU of the first bandwidth.

According to some embodiments, the PPDU of the first bandwidth received is an extreme high throughput (EHT) multi-user (MU) PPDU of 160+160 MHz or 320 MHz; and the PPDU of the first bandwidth sent is an EHT TB PPDU of 160+160 MHz or 320MH.

According to some embodiments, the second bandwidth is 20 MHz, 40 MHz, 80 MHz or 160 MHz.

According to some embodiments, the physical layer capability information includes a second identifier, and the second identifier includes a plurality of bits configured to indicate information of a channel bandwidth and/or a resource unit (RU) supported of the communication device.

According to some embodiments, the plurality of bits includes at least one of the following::
a first bit, configured to identify the support capability of the communication device for the channel bandwidths of 40 MHz and 80 MHz;
a second bit, configured to identify the support capability of the communication device for the channel bandwidth of 160 MHz;
a third bit, configured to identify the support capability of the communication device for the channel bandwidth of 160 MHz or 80+80 MHz;
a fourth bit, configured to identify the support capability of the communication device for the channel bandwidth of 320 MHz;
a fifth bit, configured to identify the support capability of the communication device for the channel bandwidth of 320 MHz or 160+160 MHz;
a sixth bit, configured to identify the support capability of the communication device for transmitting the PPDU of the first bandwidth by using the resource unit with a size smaller than a first size; and
a seventh bit, configured to identify the support capability of the communication device for transmitting the PPDU of the first bandwidth by using the resource unit with a size equal to the first size.

According to some embodiments, in case that the first bit is set to a third value and the sixth bit is set to a fourth value, it is indicated that the communication device supports an OFDMA transmission of 160 MHz, 160 MHz+160 MHz, 320 MHz or 240 MHz.

According to some embodiments, in case that the second bit is set to a fifth value and the sixth bit is set to a sixth value, it is indicated that the communication device supports an OFDMA transmission of 160 MHz+160 MHz, 320 MHz or 240 MHz.

According to some embodiments, the OFDMA transmission supports a multiple resource unit (MRU) or a single type resource unit (SRU).

According to some embodiments, in case that the seventh bit is set to a seventh value and the first identifier is set to the second value, it is indicated that receiving or sending the PPDU of 40 MHz and/or 80 MHz is supported, and in case that the seventh bit is set to an eighth value and the first identifier is set to the first value, it is indicated that receiving or sending the PPDU of 40 MHz, 80 MHz, 160 MHz, 80+80 MHz, 320 MHz and/or 160 MHz +160 MHz is supported.

According to some embodiments, in case that the second bandwidth is 20 MHz, the resource unit with the first size is 242-tone, and the resource unit with the size smaller than the first size is: 26-tone, 52-tone, 106-tone, 52+26-tone or 106+26-tone.

According to some embodiments, in case that the second bandwidth is 40 MHz, the resource unit with the first size is 484-tone, and the resource unit with the size smaller than the first size is: 26-tone, 52-tone, 106-tone, 52+26-tone or 106+26-tone.

According to some embodiments, in case that the second bandwidth is 80 MHz, the resource unit with the first size is 996-tone, and the resource unit with the size smaller than the first size is: 26-tone, 52-tone, 106-tone, 52+26-tone, 106+26-tone or 484+242-tone.

According to some embodiments, in case that the second bandwidth is 160 MHz, the resource unit with the first size is 996×2-tone, and the resource unit with the size smaller than the first size is: 26-tone, 52-tone, 106-tone, 52+26-tone, 106+26-tone, 484+996-tone or 996+484+242-tone.

According to some embodiments, the first message frame is a probe request frame, a multi-link probe request frame or an association request frame.

According to some embodiments, the physical layer capability information is encapsulated in an extreme high throughput physical layer (EHT PHY) capability information element or a multi-link (ML) information element.

In FIG. 2, the first message frame, the physical capability information, the first identifier, and the second identifier may be similar to those described with reference to FIG. 1, and repeated descriptions are omitted herein for the sake of brevity.

The communication device 200 may perform the communication method described with reference to FIG. 1, and repeated descriptions are omitted herein for the sake of brevity. In addition, the communication device 200 shown in FIG. 2 is only illustrative, and embodiments of the present disclosure are not limited thereto. For example, the communication device 200 may also include other modules, such as a memory module. In addition, various modules in the communication device 200 may be combined into more complex modules, or may be divided into more individual modules to support various functions.

In an embodiment, the communication device 200 described in FIG. 2 may be applied to an access point device (AP). In this case, the communicating module 220 may receive the first message frame, and the processing module 210 may parse the first message frame to obtain the capability information of the station, so as to control the communicating module 220 to perform a communication operation with the station. The first message frame may include physical layer capability information, and the physical layer capability information may include a first identifier and/or a second identifier. The first message frame, the physical capability information, the first identifier, and the second identifier may be similar to those described with reference to FIG. 1, and repeated descriptions are omitted herein for the sake of brevity.

The communication method and communication device described with reference to FIG. 1 and FIG. 2 and other embodiments may identify whether a device operating at a small bandwidth (20 MHz, 80 MHz, 160 MHz) is able to receive or send a 320 MHz OFDMA PPDU under a maximum bandwidth of 320 MHz by setting the first identifier and/or the second identifier in the physical layer capability information, and may achieve that the station operating at the small bandwidth supports the OFDMA transmission of the large bandwidth by defining the identifiers that the station operating at the small bandwidth supports the transmission of the large bandwidth, thereby improving the spectrum utilization.

Based on the same principles as the methods provided by embodiments of the present disclosure, embodiments of the present disclosure further provide an electronic device, the electronic device includes a processor and a memory; the memory stores machine-readable instructions (or may be referred to as a "computer program"); and the processor is configured to execute the machine-readable instructions to implement the methods described with reference to FIG. 1 and other embodiments.

Embodiments of the present disclosure also provide a computer-readable storage medium, and a computer program is stored on the computer-readable storage medium. When the computer program is executed by a processor, the methods described with reference to FIG. 1 are implemented.

In an illustrative embodiment, the processor may be logical blocks, modules and circuits configured to implement or perform various illustrative embodiments described in connection with the present disclosure, such as a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof. The processor may also be a combination used to implement a computing function, for example, a combination including one or more microprocessors, or a combination including a Digital Signal Processor (DSP) and a microprocessor, or the like.

In an illustrative embodiment, the memory may include but not be limited to, for example, a Read Only Memory (ROM), a Random Access Memory (RAM), an Electrically Erasable Programmable Read Only Memory (EEPROM), a Compact Disc Read Only Memory (CD-ROM) or other optical disk memories, optical disc memories (including a compact disc, a laser disc, an optical disc, a digital general disc, a Blu-ray disc and the like), magnetic disk storage mediums or other magnetic storage devices, or any other medium that can be used to carry or store program codes in the form of instructions or data structures and can be accessed by a computer.

It should be understood that although steps in the flowchart of the accompanying drawings are shown sequentially as indicated by arrows, the steps are not necessarily performed sequentially in the order indicated by the arrows. Unless explicitly stated otherwise in the present disclosure, there is no strict sequential limitation on the execution of these steps, which may be performed in other orders. In addition, at least some of the steps in the flowchart of the accompanying drawings may include a plurality of sub-steps or a plurality of stages, which are not necessarily executed at the same time, and may be executed at different times, and the plurality of sub-steps or stages are not necessarily performed sequentially, but may be performed alternately or alternatively with other steps or at least part of sub-steps or stages of other steps.

Although the present disclosure has been illustrated and described with reference to certain embodiments of the present disclosure, it will be understood by those skilled in the art that various changes in form and details may be made therein without departing from the scope of the present disclosure. Therefore, the scope of the present disclosure should not be limited by the embodiments, but should be defined by the appended claims and their equivalents.

## Claims

1. A communication method, comprising:
determining a first message frame, wherein the first message frame comprises physical layer capability information, and the physical layer capability information at least indicates a capability of a device operating at a second bandwidth for receiving or sending a physical layer protocol data unit (PPDU) of a first bandwidth, wherein the first bandwidth is greater than or equal to 160 MHz; and
performing a communication operation based on the first message frame.

2. The communication method of claim 1, wherein the physical layer capability information comprises a first identifier, and
wherein the first identifier indicates a support capability of the device operating at the second bandwidth for receiving or sending the PPDU of the first bandwidth.

3. The communication method of claim 2, wherein
in case that the first identifier is set to a first value, the first identifier indicates that the device operating at the second bandwidth supports receiving or sending the PPDU of the first bandwidth; and
in case that the first identifier is set to a second value, the first identifier indicates that the device operating at the second bandwidth does not support receiving or sending the PPDU of the first bandwidth.

4. The communication method of claim 2 or 3,
wherein the PPDU of the first bandwidth received is an extreme high throughput (EHT) multi-user (MU) PPDU of 160+160 MHz or 320 MHz; and
wherein the PPDU of the first bandwidth sent is an EHT trigger-based (TB) PPDU of 160+160 MHz or 320MH.

5. The communication method of claim 2 or 3, wherein the second bandwidth is 20 MHz, 40 MHz, 80 MHz or 160 MHz.

6. The communication method of claim 5, wherein the physical layer capability information comprises a second identifier, and
wherein the second identifier comprises a plurality of bits configured to indicate information of a channel bandwidth and/or a resource unit (RU) supported of the device.

7. The communication method of claim 6, wherein the plurality of bits comprise at least one of following:
a first bit, configured to identify the support capability of the device for the channel bandwidths of 40 MHz and 80 MHz;
a second bit, configured to identify the support capability of the device for the channel bandwidth of 160 MHz;
a third bit, configured to identify the support capability of the device for the channel bandwidth of 160 MHz or 80+80 MHz;
a fourth bit, configured to identify the support capability of the device for the channel bandwidth of 320 MHz;
a fifth bit, configured to identify the support capability of the device for the channel bandwidth of 320 MHz or 160+160 MHz;
a sixth bit, configured to identify the support capability of the device for transmitting the PPDU of the first bandwidth by using the resource unit with a size smaller than a first size; and
a seventh bit, configured to identify the support capability of the device for transmitting the PPDU of the first bandwidth by using the resource unit with a size equal to the first size.

8. The communication method of claim 7, wherein in case that the first bit is set to a third value and the sixth bit is set to a fourth value, it is indicated that the device supports an orthogonal frequency-division multiple access (OFDMA) transmission of 160 MHz, 160 MHz+160 MHz, 320 MHz or 240 MHz.

9. The communication method of claim 7, wherein in case that the second bit is set to a fifth value and the sixth bit is set to a sixth value, it is indicated that the device supports an OFDMA transmission of 160 MHz+160 MHz, 320 MHz or 240 MHz.

10. The communication method of claim 8 or 9, wherein the OFDMA transmission supports a multiple resource unit (MRU).

11. The communication method of claim 8 or 9, wherein the OFDMA transmission supports a single type resource unit (SRU).

12. The communication method of claim 7, wherein
in case that the seventh bit is set to a seventh value and the first identifier is set to the second value, it is indicated that receiving or sending the PPDU of 40 MHz and/or 80 MHz is supported, and
in case that the seventh bit is set to an eighth value and the first identifier is set to the first value, it is indicated that receiving or sending the PPDU of 40 MHz, 80 MHz, 160 MHz, 80+80 MHz, 320 MHz and/or 160 MHz +160 MHz is supported.

13. The communication method of claim 7, wherein in case that the second bandwidth is 20 MHz, the resource unit with the first size is 242-tone, and the resource unit with the size smaller than the first size is: 26-tone, 52-tone, 106-tone, 52+26-tone or 106+26-tone.

14. The communication method of claim 7, wherein in case that the second bandwidth is 40 MHz, the resource unit with the first size is 484-tone, and the resource unit with the size smaller than the first size is: 26-tone, 52-tone, 106-tone, 52+26-tone or 106+26-tone.

15. The communication method of claim 7, wherein in case that the second bandwidth is 80 MHz, the resource unit with the first size is 996-tone, and the resource unit with the size smaller than the first size is: 26-tone, 52-tone, 106-tone, 52+26-tone, 106+26-tone or 484+242-tone.

16. The communication method of claim 7, wherein in case that the second bandwidth is 160 MHz, the resource unit with the first size is 996×2-tone, and the resource unit with the size smaller than the first size is: 26-tone, 52-tone, 106-tone, 52+26-tone, 106+26-tone, 484+996-tone or 996+484+242-tone.

17. The communication method of claim 1, wherein the first message frame is a probe request frame, a multi-link probe request frame or an association request frame.

18. The communication method of any one of claims 1 to 17, wherein the physical layer capability information is encapsulated in an extreme high throughput physical layer (EHT PHY) capability information element or a multi-link (ML) information element.

19. A communication device, comprising:
a processing module, configured to: determine a first message frame, wherein the first message frame comprises physical layer capability information, and the physical layer capability information indicates a capability of the communication device operating at a second bandwidth for receiving or sending a PPDU of a first bandwidth, wherein the first bandwidth is greater than or equal to 160 MHz; and
a communicating module, configured to: perform a communication operation based on the first message frame.

20. An electronic device, comprising:
a memory,
a processor, and
a computer program stored on the memory and executable on the processor, wherein the processor implements the method according to any one of claims 1 to 18 when executing the computer program.

21. A computer readable storage medium having stored thereon computer programs that, when executed by a processor, cause the method according to any one of claims 1 to 18 to be implemented.
